# EUROPÄISCHE PATENTSCHRIFT

(11) **EP 0 532 890 B1**
(45) Veröffentlichungstag und Bekanntmachung des Hinweises auf die Patenterteilung: **26.06.1996**
(21) Anmeldenummer: 92113372.4
(22) Anmeldetag: 05.08.1992
(51) Int. Cl.: G01K 7/22

(54) **Thermistor-Temperaturfühler**
Thermistor temperature sensor
Capteur de température à thermistor

(30) Priorität: 16.09.1991 DE 4130771
(43) Veröffentlichungstag der Anmeldung: 24.03.1993
(73) Patentinhaber: SIEMENS MATSUSHITA COMPONENTS GmbH & CO KG, D-81541 München (DE)
(72) Erfinder: Kloiber, Gerald, Ing., A-8075 Feldkirchen/Graz (AT)
(74) Vertreter: Fuchs, Franz-Josef, Dr.-Ing.

(56) Entgegenhaltungen:
- EP-A- 0 125 366
- FR-A- 2 346 700
- FUNKSCHAU Nr. 14, 1978, München, DE, Seiten 679-682; J. SCHÜRMANN : "Sensoren für die Automobil-Elektronik"

## Beschreibung

Die vorliegende Erfindung betrifft einen Thermistor-Temerpaturfühler in Form eines Zweipols aus temperaturabhängigen Widerständen nach dem Oberbegriff des Patentanspruches 1. Ein derartiger Thermistor-Temperaturfühler ist beispielsweise aus der EP-A-0 125 366 bekannt. Es handelt sich dabei um eine Kombination von Thermistoren mit positivem und negativem Temperaturkoeffizienten bzw. Kaltleitern und Heißleitern, wobei einer Parallelschaltung eines Heißleiters und eines Kaltleiters ein Heißleiter in Reihe geschaltet ist. Es handelt sich dabei insbesondere um einen Temperaturfühler für ein Motorfahrzeug. Die Gesamt-Temperaturcharakteristik ist negativ und besitzt ein Plateau, das um die zu erfassende normale Arbeitstemperatur zentriert ist, so daß Toleranzen im Fühlersystem und normale Schwankungen der Arbeitstemperatur durch eine Fahrzeug-Temperaturanzeige nicht erfaßt werden. Es werden lediglich abnormale Temperaturänderungen aufgrund von Fehlern oder Überlastbedingungen angezeigt.

Ein derartiger Temperaturfühler ist insofern aufwendig, als er drei temperaturabhängige Widerstände aufweist, die in thermischem Kontakt miteinander stehen müssen.

Der vorliegenden Erfindung liegt die Aufgabe zugrunde, einen weniger aufwendigen Temperaturfühler der in Rede stehenden Art anzugeben.

Diese Aufgabe wird bei einem Temperaturfühler der eingangs genannten Art erfindungsgemäß durch die Merkmale des kennzeichnenden Teils des Patentanspruches 1 gelöst.

Weiterbildungen der Erfindung sind Gegenstand von Unteransprüchen.

Die Erfindung wird im folgenden anhand von in den Figuren der Zeichnung dargestellten Ausführungsbeispielen näher erläutert. Es zeigt:
- Figur 1: eine Temperatur/Widerstands-Charakteristik eines erfindungsgemäßen Thermistor-Temperaturfühlers und
- Figur 2: einen erfindungsgemäßen Temperaturfühler in Hybrid-Bauweise, wobei gleichzeitig spezielle Ausbildungsmöglichkeiten der temperaturabhängigen Widerstände dargestellt sind.

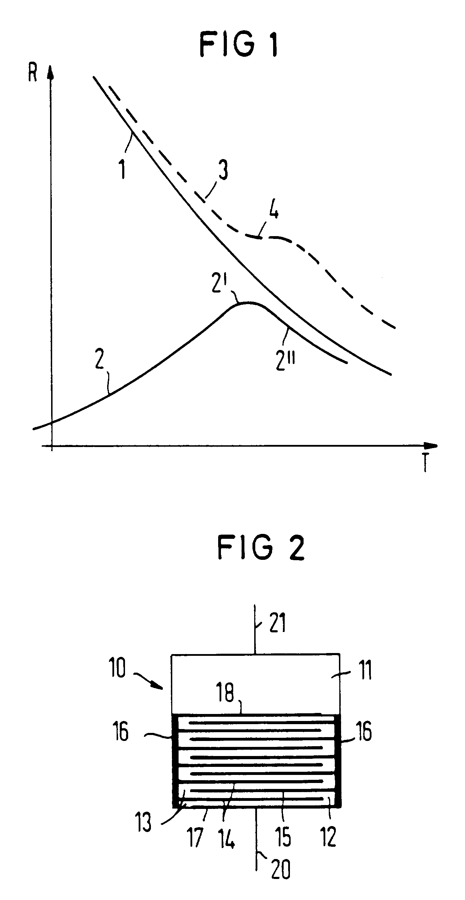

Im Diagramm nach Figur 1 einer Temperatur-/Widerstands-Charakteristik eines erfindungsgemäßen Thermistor-Temperaturfühlers ist dessen Widerstand R (in logarithmischem Maßstab) über der Temperatur T in Grad Celsius aufgetragen. Eine Kurve 1 ist die Charakteristik eines Heißleiters, während eine Kurve 2 die Charakteristik eines Kaltleiters ist. In an sich bekannter Weise geht die Charakteristik 2 des Kaltleiters jenseits eines Widerstandsmaximums 2' in einen Kennlinienbereich 2'' über, in dem der Kaltleiter Heißleitereigenschaften besitzt. Durch Superposition der Charakteristiken 1 und 2 für den Heißleiter bzw. Kaltleiter entsteht eine Charakteristik 3 des erfindungsgemäßen Thermistor-Temperaturfühlers. Erfindungswesentlich ist dabei, daß der Heißleiter und der Kaltleiter in Reihe geschaltet sind und daß der Kaltleiter eine solche Curie-Temperatur besitzt, daß er im Betriebstemperuturbereich des Temperaturfühlers in seinem Kennlinienbereich 2'' jenseits des Widerstandsmaximums 2' arbeitet. Dadurch entsteht in der Thermistor-Temperaturfühlercharakteristik 3 in einem vorgebbaren Temperaturbereich ein konstanter Widerstandsverlauf bzw. ein Plateau 4, so daß die Eigenschaften erreicht werden, wie sie für Temperaturschwankungen oben bereits für den bekannten Temperaturfühler erläutert wurden.

Generell ist darüber hinaus darauf hinzuweisen, daß sich der Temperaturbereich des Plateaus 4 durch geeignete Wahl des Keramikmaterials für den Heißleiter und den Kaltleiter oder durch Wahl der Geometrie in bestimmten Grenzen beeinflussen läßt.

Der erfindungsgemäße Temperaturfühler kann beispielsweise mittels Scheiben bzw. Plättchen beliebiger Formen, z. B. Rechteckform, aufgebaut werden, die durch beliebige Verbindungstechniken, z. B. Löten, Klemmen, Schweißen oder Kleben mit einander verbunden werden können. Derartige Bauformen sind in beliebige Gehäuseformen montierbar.

Da für Anwendungen im Kraftfahrzeugbereich zur Kühlwasser-Temperaturanzeige relativ niederohmige Temperatursensoren notwendig sind, zur Zeit aber niederohmige Materialien für Kaltleiter mit tiefen Curie-Temperaturen nicht zur Verfügung stehen, ist es für die Realisierung gebräuchlicher Temperaturfühler-Größen mit einem Durchmesser von beispielsweise 6 mm mindestens einen der temperaturabhängigen Widerstände, vorzugsweise den Kaltleiter in Vielschichttechnik zu realisieren. Dabei bietet es sich insbesondere an, den Temperaturfühler in Hybrid-Bauweise auszubilden, bei der Kaltleiter- und Heißleitermaterial in elektrischem Kontakt miteinander vorgesehen sind und an der jeweiligen Außenseite eine Anschlußmetallisierung aufgebracht ist. Eine derartige Ausführungsform ist in Figur 2 dargestellt.

Bei dieser Ausführungsform sind ein Heißleiter 11 und ein Kaltleiter 12 in elektrischem Kontakt miteinander und übereinander angeordnet, wobei an der Verbindungsfläche zwischen Heißleiter 11 und Kaltleiter 12 eine elektrische Verbindung über eine gemeinsame Anschlußmetallisierung erfolgt. Auf der jeweiligen Außenseite des Heißleiters 11 bzw. des Kaltleiters 12 ist eine Anschlußmetallisierung 17 vorgesehen, die ihrerseits mit einem Außenanschluß 20 bzw. 21 versehen sind.

Wie aus Figur 2 ersichtlich, ist insbesondere der Kaltleiter 12 in Vielschichttechnik ausgebildet, bei der zwischen einer Vielzahl von Schichten aus keramischem Material 13 Anschlußmetallisierungen 14 bzw. 15 vorgesehen sind, die alternierend zu jeweils einer von zwei sich gegenüberliegenden Außenflächen des Kaltleiters geführt sind. An diesen Außenflächen sind die jeweiligen Anschlußmetallisierungen 14 bzw. 15 mittels einer weiteren Metallsierung 16 miteinander verbunden. Diese Metallisierungen 16 stehen ihrerseits mit ihrer Anschlußmetallisierung 17 bzw. der Anschlußmetallisierung 18 in elektrischem Kontakt.

Grundsätzlich ist es auch möglich, bei einer Ausführungsform in Hybridtechnik, wie sie in Figur 2 dargestellt ist, beide temperaturabhängigen Widerstände in Vielschichttechnik auszuführen.

## Patentansprüche

1. Thermistor-Temperaturfühler in Form eines Zweipols aus temperaturabhängigen in thermischem Kontakt miteinander stehenden Widerständen (11,12) mit positivem und negativem Temperaturkoeffizienten, Heißleiter bzw. Kaltleiter, dessen Temperatur-/ Widerstands-Charakteristik (3) in einem vorgegebenen Temperaturbereich einen konstanten Verlauf, Plateau (4), besitzt,
**gekennzeichnet durch** eine elektrische Reihenschaltung nur eines Heißleiters (11) und eines Kaltleiters (12) und durch eine solche Curie-Temperatur des Kaltleiters (12), daß dieser im Temperaturfühler-Betriebstemperaturbereich in seinem Kennlinienbereich (2") jenseits seines Widerstandsmaximums (2') arbeitet.

2. Temperaturfühler nach Anspruch 1,
**gekennzeichnet durch** eine Ausbildung in Hybrid-Bauweise, bei der Heißleiter- und Kaltleitermaterial in elektrischem Kontakt miteinander vorgesehen sind und an der jeweiligen Außenseite eine Anschlußmetallisierung (17) aufgebracht ist.

3. Temperaturfühler nach Anspruch 2,
**dadurch gekennzeichnet**, daß wenigstens eines der Elemente Heißleiter (11) bzw. Kaltleiter (12) in Vielschichttechnik ausgebildet ist.

4. Temperaturfühler nach Anspruch 2 und 3,
**dadurch gekennzeichnet,** daß der Kaltleiter (12) in Vielschichttechnik ausgebildet ist.

## Claims

1. Thermistor temperature sensor in the form of a two-terminal component of temperature-dependent resistors (11,12) which are in thermal contact with one another and have positive and negative temperature coefficients, NTC resistor and PTC resistor, respectively, whose temperature-resistance characteristic (3) has a constant pattern, plateau (4), in a given temperature range, characterized by an electric series circuit of only one NTC resistor (11) and one PTC resistor (12) and by the PTC resistor (12) having a Curie temperature such that, in the operating temperature range of the temperature sensor, it operates in its characteristic range (2") beyond its resistance maximum (2').

2. Temperature sensor according to Claim 1, characterized by a configuration using hybrid design, in which the NTC-resistor material and the PTC-resistor material are provided in electrical contact with each other and a metallic terminal coating (17) is applied to the respective outside.

3. Temperature sensor according to Claim 2, characterized in that at least one of the elements NTC resistor (11) and PTC resistor (12), respectively, is formed by a multilayer technique.

4. Temperature sensor according to Claim 2 or 3, characterized in that the PTC resistor (12) is formed by a multilayer technique.

## Revendications

1. Capteur de température à thermistance sous forme d'un dipôle constitué de résistances (11, 12), qui dépendent de la température, qui sont en contact thermique l'une avec l'autre, qui ont des coefficients de température positif et négatif et qui sont appelées thermistance CTP ou thermistance CTN, la caractéristique (3) température/résistance du dipôle étant constante, plateau (4), dans un domaine prescrit de température,
caractérisé par un branchement électrique en série d'une seule thermistance (11) à coefficient de température négatif et d'une seule thermistance (12) à coefficient de température positif et par une température de Curie de la thermistance (12) à coefficient de température positif telle que celle-ci fonctionne, dans le domaine de température, de fonctionnement du capteur de température, dans son domaine (2") de caractéristiques de l'autre côté de son maximum (2') de résistance.

2. Capteur de température suivant la revendication 1,
caractérisé par un mode de construction hybride, dans lequel il est prévu que le matériau de la thermistance à coefficient de température négatif et le matériau de la thermistance à coefficient de température positif soient en contact électrique l'un avec l'autre et une métallisation (17) de raccordement est mise en place sur chaque côté extérieur.

3. Capteur de température suivant la revendication 2,
caractérisé en ce que au moins l'un des éléments thermistance (11) à coefficient de température négatif ou thermistance (12) à coefficient de température positif est fabriqué en technique multi-couches.

4. Capteur de température suivant les revendications 2 et 3,
caractérisé en ce que la thermistance (12) à coefficient de température positif est fabriquée en technique multi-couches.
